# EUROPEAN PATENT APPLICATION

(11) **EP 4 440 001 A1**
(43) Date of publication of application: **02.10.2024**
(21) Application number: 23398004.4
(22) Date of filing: 29.03.2023
(51) Int. Cl.: H04B 7/185, H04W 88/08

(54) **AUTOMATIC ATTACHED DRONE SMALL CELL**

(71) Applicant: Vodafone Portugal - Comunicações Pessoais, S.A., 1998-017 Lisboa (PT); Vodafone Group Services Limited, Newbury RG14 2FN (GB)
(72) Inventor: Ribeiro Santos, Rudolfo, London, W2 6BY (GB)
(74) Representative: Boult Wade Tennant LLP

(57) **Abstract**

There is provided a mobile unit for a communications network including a radio access network and a fixed node, the mobile unit comprising an unmanned aerial vehicle, UAV, a radio transceiver for transmitting and receiving wireless communications over the radio access network, the radio transceiver attached to the UAV, a communication interface for establishing communication with the fixed node of the communications network, so as to enable exchange of communications transmitted and received over the radio access network by the radio transceiver with the fixed node of the communications network, and an attachment device for removably securing the UAV to a structure.

## Description

### FIELD OF THE INVENTION

The present disclosure relates to methods and apparatus for configuration and operation of communications networks, including Radio Access Network (RAN) installation and placement.

### BACKGROUND

For the installation of mobile networks, one activity is the installation and placement of the RAN, which is traditionally carried out very few times, and involves significant manual involvement from experts and technically skilled installation professionals. For structures with varied uses, there may be a requirement to reconfigure RAN coverage frequently based on changes in use, and therefore traditional means of installing and positioning RAN equipment is unsuited for such applications. One example of a structure subjected to such varied uses is for the so-called 'fourth industrial revolution', or 'Industry 4.0', which involves rapid changes to technology and industries. For example, factories may be expected to have frequent changes to floor layout and assembly line configuration. Traditional means of installing and positioning RAN equipment is unsuited for the rapid changes expected for at least some operating environments, which may require RAN coverage to be reconfigured frequently and quickly.

It is therefore desirable to be able to easily reconfigure and reposition RAN devices according to the demands of a particular operating environment, such as a factory or assembly line layout, in order to provide improved coverage.

It is in this context that the subject-matter contained in the present application has been devised.

### SUMMARY OF THE INVENTION

The present disclosure provides means for supporting reconfiguration and repositioning of RAN devices according to rapidly changing demands of operating environments, through means of a repositionable and removably securable mobile unit for a RAN. Such operating environments may include factories, assembly lines, airports, museum or exhibition space, offices, warehouses, performance venues, sporting venues, shopping centres, emergency hospitals or disaster relief centres, festival events, or similar.

The disclosure provides a mobile unit for a communications network including a radio access network and a fixed node, the mobile unit comprising an unmanned aerial vehicle, UAV, a radio transceiver for transmitting and receiving wireless communications over the radio access network, the radio transceiver attached to the UAV, a communication interface for establishing communication with the fixed node of the communications network, so as to enable exchange of communications transmitted and received over the radio access network by the radio transceiver with the fixed node of the communications network, and an attachment device for removably securing the UAV to a structure.

The disclosure also provides a docking unit for removably securing a mobile unit, the docking unit comprising an anchoring device, the anchoring device arranged to mechanically interface with an attachment device of the mobile unit, so as to secure the mobile unit to the anchoring device.

The disclosure also provides a communications network comprising a mobile unit, and a fixed node of the communications network, the fixed node comprising a core network gateway.

The disclosure also provides, a method for operating a mobile unit for a communications network including a radio access network and a fixed node, the method comprising positioning the mobile unit proximate a securing location of a structure, the mobile unit comprising an unmanned aerial vehicle, UAV, and a radio transceiver attached to the UAV, removably securing the mobile unit at the securing location via an attachment device, establishing communication with the fixed node of the communications network, and transmitting or receiving, via the radio transceiver, wireless communications over the radio access network.

### BRIEF DESCRIPTION OF THE DRAWINGS

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
Figures 1A and 1B show examples of an environment within which one or more mobile units may be operated, in order to obtain a desired RAN coverage, according to embodiments of the present disclosure;
Figure 2 shows a schematic diagram of components of a communications network, according to embodiments of the present disclosure;
Figure 3 shows a schematic diagram of components a communications network, according to further embodiments of the present disclosure;
Figure 4 shows a flowchart of an example method for operating a mobile unit for a communications network, according to embodiments of the present disclosure;
Figure 5 shows a flowchart of an example method for operating a mobile unit for a communications network, according to further embodiments of the present disclosure.

### DETAILED DESCRIPTION

In the following description, for purposes of explanation, numerous specific details of certain examples are set forth. Reference in the specification to "an example" or similar language means that a particular feature, structure, or characteristic described in connection with the example is included in at least that example, but not necessarily in other examples.

In a telecommunications network, the baseband is the range of frequencies occupied by a signal that has not been modulated to higher frequencies. The baseband unit (BBU) is a unit that processes baseband signals, sending/receiving data to/from a radio transceiver from/to the core network. The baseband unit is connected to the radio transceiver which performs the transmit and receive radio functions. The baseband unit is responsible for communication through the physical interface to the core network.

A radio transceiver may be positioned at a desired location via means of an unmanned aerial vehicle, UAV. An unmanned aerial vehicle, UAV, may include a propulsion device operable to fly the UAV between a plurality of locations. A UAV, carrying a radio transceiver, may fly to a specific aerial location in order to provide improved wireless coverage using the radio transceiver. However, maintaining a UAV at this aerial location typically involves maintaining operation of the propulsion device in order to keep the UAV in position, which requires continuous power to be provided to the propulsion device during operation. UAV devices carrying a larger payload, including radio transceiver or baseband equipment, or large batteries, generally experience higher power draw in order to provide the necessary propulsion to maintain flight under a large payload. Therefore, UAV devices carrying radio transceiver or baseband equipment generally experience reduced flight times due to their increased payload. This makes typical UAVs suited only for short-duration events, and unsuited for mid- to long-term use.

The present disclosure provides a mobile unit with a UAV for positioning a radio transceiver at a desired location. The mobile unit additionally provides an attachment device suitable for securing the UAV, and hence the mobile unit, at a securing position of a structure, without the need to maintain operation of the UAV propulsion device in order to keep the mobile unit in position. Therefore, the only power drawn by the UAV is that drawn during positioning of the mobile unit, and during normal operation the only power consumption is the power consumed by the radio transceiver, baseband unit, and communication interface. Accordingly, longer operation times can be achieved compared to devices for which UAV propulsion must be maintained throughout operation, due to the reduced power consumption.

According to some examples or embodiments of the disclosure, there is provided a mobile unit for a communications network including a radio access network and a fixed node, the mobile unit comprising: an unmanned aerial vehicle, UAV; a radio transceiver for transmitting and receiving wireless communications over the radio access network, the radio transceiver attached to the UAV; a communication interface for establishing communication with the fixed node of the communications network, so as to enable exchange of communications transmitted and received over the radio access network by the radio transceiver with the fixed node of the communications network; and an attachment device for removably securing the UAV to a structure.

The use of a UAV for positioning or repositioning the mobile unit reduces the need for complex or skilled labour for installing a radio transceiver in the securing location, which is often an above ground location requiring significant effort or safety equipment to access, such as the construction of scaffolding, use of lifts, or use of harness equipment.

The radio transceiver may be operable to provide RAN coverage (i.e. wireless network coverage). For example, when the communication interface establishes communication with the fixed node of the communications network, the radio transceiver may function as a transceiver for a base station (e.g. a small-cell base station) of the RAN.

In some examples or embodiments, the fixed node of the communications network comprises a baseband unit, and wherein the communication interface is operable to establish a fronthaul connection between the radio transceiver and the baseband unit. In such an embodiment, the mobile unit comprises the radio transceiver, and uses the communication interface of the mobile unit to establish a fronthaul connection to the fixed node, with said fixed node comprising the baseband unit and the core network gateway.

In some examples or embodiments, the fixed node of the communications network comprises a core network gateway, and wherein the communication interface is operable to establish a backhaul connection between the radio transceiver and the core network gateway. In such an embodiment, the mobile unit comprises both the radio transceiver and the baseband unit, and uses the communication interface of the mobile unit to establish a backhaul connection to the fixed node, with said fixed node comprising the core network gateway.

In some examples or embodiments, the communication interface comprises a wireless communication interface, such that the mobile unit is in wireless communication with the fixed node. This may include providing a wireless fronthaul connection or a wireless backhaul connection. The wireless communication interface may comprise radio frequency signals or optical wireless communication signals.

In some examples or embodiments, the communication interface comprises a wired communication interface, such that the mobile unit is in wired communication with the fixed node. This may include providing a wired fronthaul connection or a wired backhaul connection. The wired communication interface may comprise copper-based communications cables, including coaxial cable or twisted-pair cable.

In some examples or embodiments, the communication interface comprises an optical communication interface. The optical communication interface may comprise a wired optical communication interface, such as transmission via an optical fibre. The optical communication interface may comprise a wireless optical communication interface, such as transmission via unguided visible, infrared or ultraviolet light.

The attachment device is suitable for securing the UAV to a structure, such that the UAV remains in a fixed position secured to the structure when the propulsion device of the UAV is not operated or is switched off. In examples, the fixed location may be an above ground location. For example, the attachment device may be suitable for removably securing the UAV to a structure and at a fixed location at which the UAV would fall under the influence of gravity in the absence of the securing by the attachment device and without operation of the propulsion device.

The attachment device may comprise a magnetic attachment element. The magnetic attachment element may be operable to secure the mobile unit to a ferromagnetic structure, such as iron or steel support structures or beams of a factory building, or ferromagnetic docking points installed at non-magnetic parts of a building, such as brick or wood support structures or beams of a factory building. In examples, the magnetic attachment element may be detached from the structure by use of an electromagnetic detachment element, operable when energised to provide an opposing magnetic force to that of the magnetic attachment element, such that the magnetic force between the magnetic attachment element and the structure is insufficient to support the mobile unit, effectively cancelling out the securing magnetic force. In alternative examples, the propulsion device of the UAV may be operable to provide a thrust force in a direction opposing the magnetic force provided by the magnetic attachment element such that the magnetic force between the magnetic attachment element and the structure is insufficient to support the mobile unit, effectively pushing the mobile unit away from the securing location with sufficient force to overcome the securing magnetic force.

The attachment device may comprise an electromagnetic attachment element. The electromagnetic attachment element may be similarly operable, when energised, to secure the mobile unit to a ferromagnetic structure, such as iron or steel support structures or beams of a factory building, or ferromagnetic docking points installed at non-magnetic parts of a building, such as brick or wood support structures or beams of a factory building. The mobile unit may be detached from the structure by deenergising the electromagnetic attachment element, such that the securing magnetic force is reduced.

The attachment device may comprise an electromechanical attachment element. The electromechanical attachment element may be any device comprising an element operable to switch between an energised state and a deenergised state, so as to secure the mobile unit to a structure. For example, an electromechanically controlled clamping or 'claw'-like element may be used to secure the mobile unit to a cable, beam, or bracket of a structure, such that the mobile unit is securely suspended from the securing cable, beam, or bracket. In alternative examples, an electromechanically controlled solenoid element may be used to secure the mobile unit to a receiving element of an anchoring device, the anchoring device being secured at a predetermined location of the structure.

The attachment device may comprise a mechanical attachment element. The mechanical attachment element may be any device comprising an element suitably configured to secure the mobile unit to a structure without use of magnetism, electromagnetism, or electromechanical actuation. For example, a curved or 'hook'-like element may be used to secure the mobile unit to a cable, beam, or bracket of a structure, such that the mobile unit is securely suspended from the securing cable, beam, or bracket.

The mobile unit may comprise a battery suitable for powering the UAV during positioning, as well as for powering the radio transceiver, baseband unit, and communication interface during normal operation. The mobile unit may comprise one or more processors suitable for monitoring a charge level of the battery. In examples, the processor of the mobile unit may issue a warning to a network operator, in response to a charge level of the battery drops below a predetermined threshold. In examples, the processor mobile unit may be suitable for detaching the mobile unit from the securing location and piloting to an accessible location, in response to a charge level of the battery dropping below a predetermined threshold. The accessible location may be a recharging point, suitable for recharging the battery of the mobile unit.

A plurality of mobile units may be operated cooperatively, wherein a replacement mobile unit may take the place of a mobile unit in need of recharging, such that coverage or connectivity is not lost or otherwise effected during a recharge operation of a mobile unit. One or more 'spare' mobile units may be operated alongside a plurality of operational mobile units, in order to ensure connectivity is maintained irrespective of mobile unit charging.

According to some examples or embodiments of the disclosure, there is provided a docking unit for removably securing a mobile unit according to any of the examples or embodiments disclosed herein, the docking unit comprising: an anchoring device, the anchoring device arranged to mechanically interface with an attachment device of the mobile unit, so as to secure the mobile unit to the anchoring device. A docking unit may be used as a point at which the mobile unit can safely secure itself. For example, a plurality of docking units may be installed at a plurality of locations around a ceiling of a structure, such that a mobile unit can selectively secure itself to any of the plurality of docking units. Securing the mobile unit to the docking unit may also comprise making a connection to one or both of a communication connector and a power connector. The docking unit comprises an anchoring device suitable for the attachment device to be secured to, for example through a mechanical interface, or a ferromagnetic surface suitable for a magnetic or electromagnetic attachment device to secure to.

Some examples or embodiments further comprise a power transfer unit, operable to supply electrical power to the mobile unit when the mobile unit is secured to the anchoring device. In some examples, the docking unit may be operable to provide electrical power to the mobile unit whilst the mobile unit is secured to the docking unit. In examples, electrical power may be provided to the mobile unit via an electrically conductive connection. In alternative examples, electrical power may be provided to the mobile unit via an inductive 'wireless' connection.

Some examples or embodiments further comprise a communication connector, the communication connector arranged to communicatively couple with the communication interface of the mobile unit when the mobile unit is secured to the anchoring device. The docking unit may comprise a communication connector to communicatively couple with a corresponding connector of the mobile unit, so as to provide communications between the communication interface of the mobile unit and the docking unit, wherein said docking unit is in communication with the fixed node by means of wired or wireless communication. Communication between the docking unit and the mobile unit may comprise a wired communication connection, or may comprise a short-range wireless communication. In examples, the communication may use powerline technologies, such that a single connection is used for providing both electrical power and communications to the mobile unit. In examples, the docking unit may comprise a baseband unit.

According to some examples or embodiments of the disclosure, there is provided a system for a communications network, comprising: a mobile unit according to any of the examples or embodiments disclosed herein; and a fixed node of the communications network, the fixed node comprising a core network gateway. Some examples or embodiments further comprise a docking unit according to any of the examples or embodiments disclosed herein.

According to some examples or embodiments of the disclosure, there is provided a method for operating a mobile unit for a communications network including a radio access network and a fixed node, the method comprising: positioning the mobile unit proximate a securing location of a structure, the mobile unit comprising a unmanned aerial vehicle, UAV, and a radio transceiver attached to the UAV; removably securing the mobile unit at the securing location via an attachment device; establishing communication with the fixed node of the communications network; and transmitting or receiving, via the radio transceiver, wireless communications over the radio access network.

Some examples or embodiments further comprise detaching the mobile unit from the securing location; repositioning the mobile unit proximate a second securing location of the structure; removably securing the mobile unit at the second securing location via the attachment device; establishing communication with the fixed node of the communications network; and transmitting or receiving, via the radio transceiver, wireless communications over the radio access network.

According to some examples or embodiments of the disclosure, there is provided a method for deploying one or more mobile units according to any of the examples or embodiments disclosed herein, comprising: determining a desired coverage; determining a securing location of each mobile unit of the one or more mobile units to achieve the desired coverage; and providing instructions to the one or more mobile units, the instructions operable to cause the one or more mobile units to move to the respective determined securing location.

The method may be carried out by a control device which is communicatively coupled with the one or more mobile units. The control device may comprise any suitable electronic device operable to issue control instructions to the one or more mobile units.

In examples, the securing locations may be manually entered by a user. For example, the locations may be entered using one or more of a set of coordinates, a securing location identifier, a docking unit identifier, or via a graphical user interface.

In some examples or embodiments the desired coverage is obtained based on a user input. The user input may comprise a drawn coverage area on a plan view of the structure. The user input may comprise a factory specification, comprising one or more of a factory layout, a required data rate, or a required number of concurrent users.

Some examples or embodiments further comprising receiving information about a predefined securing location for one or more of the one or more mobile units. The predefined securing location may be based on a mobile unit without the capability for repositioning, or where repositioning is not desired. In some examples or embodiments the predefined securing location is set based on a user input.

Any of the user inputs for deploying the one or more mobile units may be provided at a control device which is communicatively coupled with the one or more mobile units. Additionally or alternatively, user inputs may be provided at one or more further devices and communicated to the control device. The control device (or one or more further devices) may comprise a user interface (e.g. graphical user interface) for receiving user inputs.

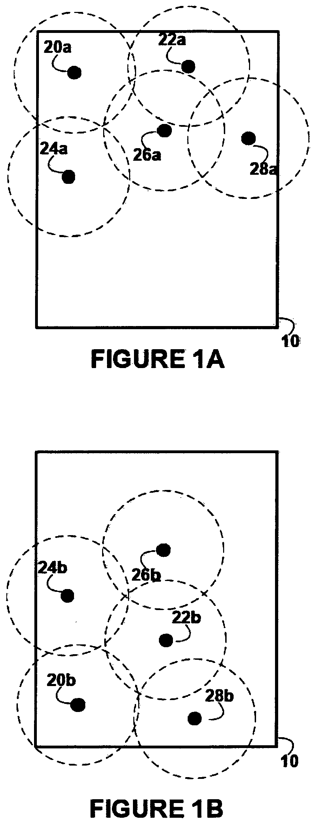

Figure 1A shows an example of an environment within which one or more mobile units may be operated, in order to provide a desired coverage. Figure 1A shows an example structure 10, such as a warehouse or factory building, in plan view. An intended use for the example structure 10 requires RAN coverage in approximately half of the structure, without any requirement for RAN coverage in the other half of the structure 10. Mobile units 20a, 22a, 24a, 26a and 28a are deployed in structure 10 in order to provide RAN coverage in the desired areas of the structure. Figure 1B shows the example structure 10 in an example where the RAN coverage is required in a different area of the building. In this example, mobile units 20b, 22b and 28b may be repositioned to different positions compared to the example of Fig.1A, whereas mobile units 24b and 26b may remain in the same position, whilst still achieving the desired coverage.

The environment, desired coverage and deployment positions of mobile units illustrated in Figures 1A and 1B are merely an illustrative example. In general, mobile units may be deployed to any suitable securing positions. For example, mobile units may be deployed to securing positions at which they serve to provide a desired RAN coverage.

In at least some examples, a desired coverage (e.g. RAN or network coverage) may be determined, e.g. for a particular operating condition. The desired coverage, may for example, be obtained by way of user input. For example, control device communicatively coupled to and capable of issuing control instructions to the mobile units may be operable to receive a user input indicative of a desired coverage. The desired coverage may be used to determine securing locations of the mobile units in order to achieve the desired coverage. For example, the electronic device capable of issuing control instructions to the mobile units may determine securing locations of the mobile units to achieve the desired coverage.

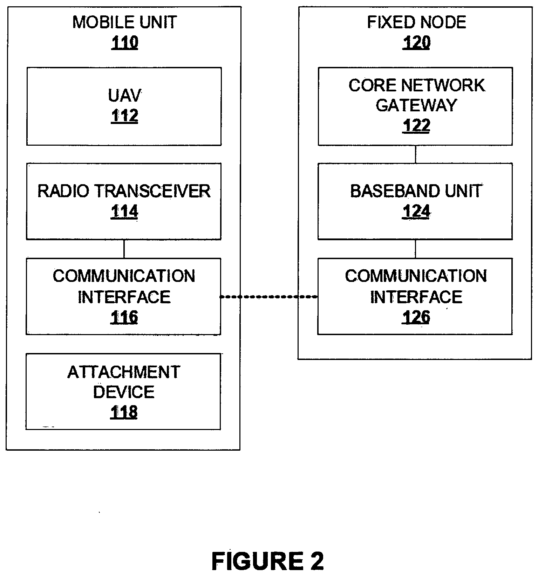

Figure 2 shows a schematic diagram of components of a communications network, according to embodiments of the present disclosure. The communications network comprises a mobile unit 110 and a fixed node 120, the mobile unit 110 being in communication with the fixed node 120. The mobile unit 110 comprises an unmanned aerial vehicle (UAV) 112, a radio transceiver 114, a communication interface 116, and an attachment device 118. The fixed node 120 comprises a core network gateway 122, a baseband unit 124, and a communication interface 126. The radio transceiver 114 of the mobile unit 110 is operable to transmit and receive wireless communications over a Radio Access Network, RAN. The radio transceiver 114 of the mobile unit 110 is communicatively coupled with the communication interface 116 of the mobile unit 110. The baseband unit 124 of the fixed node 120 is communicatively coupled with the core network gateway 122 and the communication interface 126 of the fixed node 120. The communication interface 116 of the mobile unit 110 is operable to establish communication with the communication interface 126 of the fixed node 120, so as to enable exchange of communications transmitted and received over the RAN by the radio transceiver 112 with the core network gateway 122 of the fixed node 120, via the communication interface 116 of the mobile unit 110, the communication interface 126 of the fixed node 120, and the baseband unit 124 of the fixed node 120.

The radio transceiver 114 and the communication interface 116 of the mobile unit 110 are attached to the UAV 112, such that the UAV 112 is operable to move the radio transceiver 114 and the communication interface 116 to a desired operating position. The attachment device 118 is also attached to the UAV 112, and operates to removably secure the UAV 112 to a structure at the desired operating position. In examples, the attachment device may comprise one or more of a magnetic attachment element, an electromagnetic attachment element, a mechanical attachment element or an electromechanical attachment element.

The operating position of the mobile unit 110 may be determined based on a specified RAN coverage for a particular application. For example, the RAN coverage may be specified based on a coverage requirement for a layout of factory machinery.

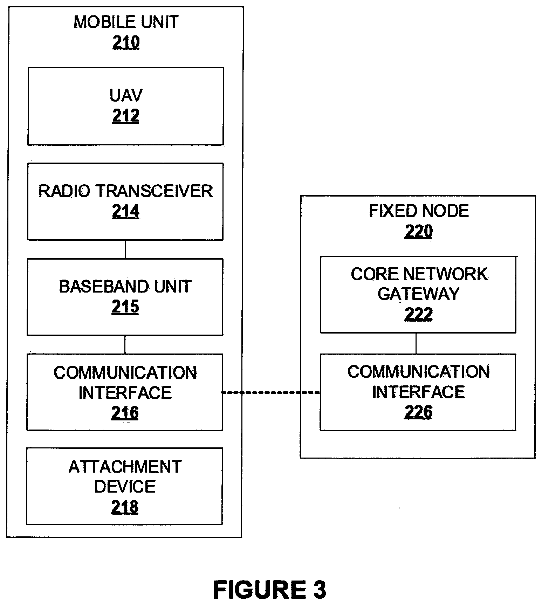

Figure 3 shows a schematic diagram of a communications network, according to further embodiments of the present disclosure. The communications network comprises a mobile unit 210 and a fixed node 220, the mobile unit 220 being in communication with the fixed node 220. The mobile unit 220 comprises a UAV 212, a radio transceiver 214, a baseband unit 215, a communication interface 216, and an attachment device 218. The fixed node 220 comprises a core network gateway 222, and a communication interface 226. The radio transceiver 214 of the mobile unit 210 is operable to transmit and receive wireless communications over a RAN. The radio transceiver 214 of the mobile unit 210 is communicatively coupled with the baseband unit 215 of the mobile unit. The baseband unit 215 is further communicatively coupled with the communication interface 216 of the mobile unit 210. The communication interface 226 of the fixed node 220 is communicatively coupled with the core network gateway 222 of the fixed node 220. The communication interface 216 of the mobile unit 210 is operable to establish communication with the communication interface 226 of the fixed node 220, so as to enable exchange of communications transmitted and received over the RAN by the radio transceiver 212 with the core network gateway 222 of the fixed node 220.

The radio transceiver 214, baseband unit 215, and the communication interface 216 of the mobile unit 210 are attached to the UAV 212, such that the UAV 212 is operable to move the radio transceiver 214, baseband unit 215, and the communication interface 216 to a desired operating position. The attachment device 218 is also attached to the UAV 212, and operates to removably secure the UAV 212 to a structure at the desired operating position. In examples, the attachment device may comprise one or more of a magnetic attachment element, an electromagnetic attachment element, a mechanical attachment element or an electromechanical attachment element.

It will be seen, from comparison of the example components of communications networks of Figure 2 and Figure 3, that the baseband unit 124 can be located as a part of the fixed node 120, with the communication interfaces 116, 126 providing a fronthaul connection between the radio transceiver 114 and the baseband unit 124. Alternatively, the baseband unit 215 can be located as a part of the mobile unit 210, with the communication interfaces 216, 226 providing a backhaul connection between the baseband unit 215 and the core network gateway 222.

The communication between the mobile unit 110, 210 and the fixed node 120, 220 may be carried out in a variety of ways. In some examples, the communication between the mobile unit 110, 210 and the fixed node 120, 220 is performed using a wireless fronthaul/backhaul communication link, such as a radio frequency signal or a optical wireless communication signal, between the communication interface 116, 216 of the mobile unit 110, 210 and the communication interface 126, 226 of the fixed node 120, 220. In other examples, the communication between the mobile unit 110, 210 and the fixed node 120, 220 is performed using a wired fronthaul/backhaul communication link, such as an optical fibre or lightweight coaxial or twisted-pair cable, between the communication interface 116, 216 of the mobile unit 110, 210 and the communication interface 126, 226 of the fixed node 120, 220. An optical fibre communication cable has a benefit of being lightweight compared to typical copper communication cables, and thus can be more easily supported and repositioned by the UAV of the mobile unit. In some examples, the communication between the mobile unit 110, 210 and the fixed node 120, 220, is performed using a wired fronthaul/backhaul connection link at a docking unit, whereby the mobile unit makes connection with a connector of the docking unit when secured, in order to communicate between the communication interface 116, 216 of the mobile unit 110, 210 and the communication interface 126, 226 of the fixed node 120, 220.

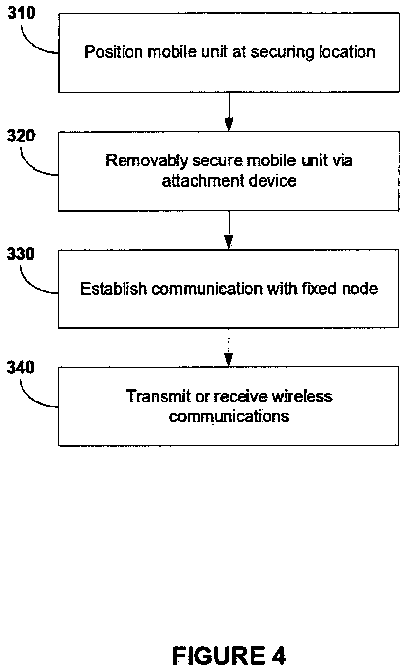

Figure 4 shows a flowchart of an example method for operating a mobile unit for a communications network, according to embodiments of the present disclosure. At step 310 of Figure 4, a mobile unit may be positioned proximate a securing location of a structure. The mobile unit may be similar to, for example, mobile unit 110 of Figure 2 or mobile unit 210 of Figure 3. The mobile unit may be positioned via means of a propulsion device of a UAV, such as UAV 112 or UAV 212. The position of the securing location may be determined based on a specified RAN coverage requirement.

At step 320 of Figure 4, the mobile unit is removably secured at the securing location via an attachment device, for example attachment device 118 or attachment device 218. The attachment device may be suitable for securing the mobile device to a structure at the securing location at which the mobile device would fall under the influence of gravity in the absence of the securing by the attachment device and without the operation of the propulsion device of the UAV. The attachment device may comprise one or more of a magnetic attachment element, an electromagnetic attachment element, a mechanical attachment element or an electromechanical attachment element.

At step 330 of Figure 4, communication is established with the fixed node of the communications network. The communications network may be established via a communication interface of a mobile unit, such as communication interface 116, 216 of mobile device 110, 210, and a communication interface of a fixed node, such as communication interface 126, 226 of fixed node 120, 220. In examples, the communications link may comprise a fronthaul communication link between a radio transceiver of the mobile unit, such as radio transceiver 114 of mobile unit 110, and a baseband unit of the fixed node, such as baseband unit 124 of fixed node 210. In alternative examples, the communication link may comprise a backhaul communication link between a baseband unit of the mobile unit, such as baseband unit 215 of mobile unit 210, and a core network gateway of the fixed node, such as core network gateway 222 of fixed node 220. Through the established communication, the radio transceiver of the mobile unit is capable of communicating with the core network gateway of the fixed node, via the baseband unit.

At step 340 of Figure 4, the radio transceiver transmits or receives wireless communications over the RAN.

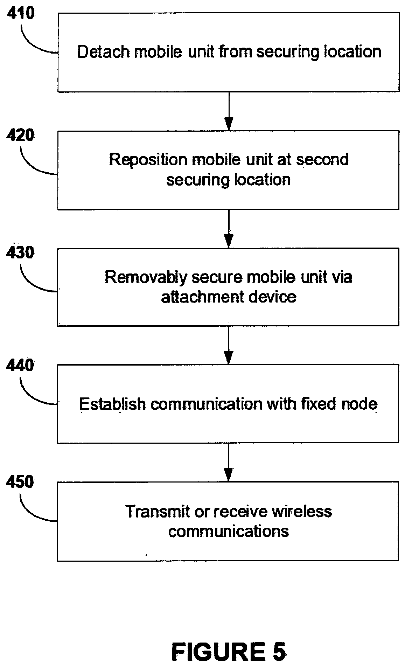

Figure 5 shows a flowchart of an example method for operating a mobile unit for a communications network, according to further embodiments of the present disclosure. The example method of Figure 5 may be carried out in addition to, or subsequently to, the example method of Figure 4, in order to reposition a mobile unit from a securing location to a second securing location. At step 410 of Figure 5, the mobile unit may be detached from a securing location of a structure. In examples, the detaching of the mobile unit may be achieved by energising or deenergising an attachment element of an attachment device, such as an electromagnetic attachment element or an electromechanical attachment element. In alternative examples, the detaching of the mobile unit may be achieved by energising the propulsion device of the UAV in a direction opposing the securing force.

At step 420 of Figure 5, a mobile unit may be repositioned proximate a second securing location of a structure. The mobile unit may be repositioned via means of the propulsion device of the UAV. The position of the second securing location may be determined based on a specified RAN coverage requirement.

At step 430 of Figure 5, the mobile unit is removably secured at the second securing location via the attachment device. The attachment device may be suitable for securing the mobile device to a structure at the second securing location at which the mobile device would fall under the influence of gravity in the absence of the securing by the attachment device and without the operation of the propulsion device of the UAV.

At step 440 of Figure 5, communication is established with the fixed node of the communications network. The communications network may be established in a similar manner to that described in respect of step 330 of Figure 3.

At step 450 of Figure 5, the radio transceiver transmits or receives wireless communications over the RAN.

While the embodiments and examples provided herein have generally been disclosed in the context of repositionable mobile units for providing RAN coverage in factories and for assembly lines, it will be appreciated that the techniques and disclosures provided herein are suitable for use in a range of other applications where wireless communication coverage is required. In general, the techniques may be used in any indoor environment, or outdoor environments for which there are sufficient suitable structures to which the mobile units can be secured. For example, the techniques may be used for indoor spaces such as airports, structures housing temporary exhibitions or museums, rented office or warehouse space, performance or sporting venues, shopping centres, emergency hospitals or disaster relief centres, or similar. The techniques may be used for outdoor spaces with sufficient suitable structures, such as festival events, temporary structures for emergency hospitals or disaster relief centres, shipping or container storage facilities, or similar.

Additionally, although the techniques provided herein have been presented in the context of cellular communication networks, it will be appreciated that the techniques and disclosures provided herein are applicable to other wireless communication means, including but not limited to WiFi, wireless loT communication, ZigBee, Bluetooth, optical wireless communication, infrared, broadcast radio, wireless positioning, RFID, radar, or similar. Some of the techniques provided herein may additionally be applicable in optical, such as image recording or projection, or audio applications, such as audio recording and reproduction.

According to some examples or embodiments of the disclosure, there is provided a mobile unit for a communications network including a radio access network and a fixed node, the mobile unit comprising: an unmanned aerial vehicle, UAV; a radio transceiver for transmitting and receiving wireless communications over the radio access network, the radio transceiver attached to the UAV; a communication interface for establishing communication with the fixed node of the communications network, so as to enable exchange of communications transmitted and received over the radio access network by the radio transceiver with the fixed node of the communications network; and an attachment device for removably securing the UAV to a structure.

In some examples or embodiments, the fixed node of the communications network comprises a baseband unit, and wherein the communication interface is operable to establish a fronthaul connection between the radio transceiver and the baseband unit.

In some examples or embodiments, the fixed node of the communications network comprises a core network gateway, and wherein the communication interface is operable to establish a backhaul connection between the radio transceiver and the core network gateway.

In some examples or embodiments, the communication interface comprises a wireless communication interface.

In some examples or embodiments, the communication interface comprises an optical communication interface.

In some examples or embodiments, the communication interface comprises a wired communication interface.

In some examples or embodiments, the attachment device comprises a magnetic attachment element.

In some examples or embodiments, the attachment device comprises an electromagnetic attachment element.

According to some examples or embodiments of the disclosure, there is provided a docking unit for removably securing a mobile unit according to any of the examples or embodiments disclosed herein, the docking unit comprising: an anchoring device, the anchoring device arranged to mechanically interface with an attachment device of the mobile unit, so as to secure the mobile unit to the anchoring device.

Some examples or embodiments further comprise a power transfer unit, operable to supply electrical power to the mobile unit when the mobile unit is secured to the anchoring device.

Some examples or embodiments further comprise a communication connector, the communication connector arranged to communicatively couple with the communication interface of the mobile unit when the mobile unit is secured to the anchoring device.

According to some examples or embodiments of the disclosure, there is provided a system for a communications network, comprising: a mobile unit according to any of the examples or embodiments disclosed herein; and a fixed node of the communications network, the fixed node comprising a core network gateway.

In some examples or embodiments, the fixed node further comprises a baseband unit, and wherein the baseband unit is communicatively coupled to the core network gateway.

Some examples or embodiments further comprise a docking unit according to any of the examples or embodiments disclosed herein.

According to some examples or embodiments of the disclosure, there is provided a method for operating a mobile unit for a communications network including a radio access network and a fixed node, the method comprising: positioning the mobile unit proximate a securing location of a structure, the mobile unit comprising a unmanned aerial vehicle, UAV, and a radio transceiver attached to the UAV; removably securing the mobile unit at the securing location via an attachment device; establishing communication with the fixed node of the communications network; and transmitting or receiving, via the radio transceiver, wireless communications over the radio access network.

Some examples or embodiments further comprise detaching the mobile unit from the securing location; repositioning the mobile unit proximate a second securing location of the structure; removably securing the mobile unit at the second securing location via the attachment device; establishing communication with the fixed node of the communications network; and transmitting or receiving, via the radio transceiver, wireless communications over the radio access network.

According to some examples or embodiments of the disclosure, there is provided a method for deploying one or more mobile units according to any of the examples or embodiments disclosed herein, comprising: determining a desired coverage; determining a securing location of each mobile unit of the one or more mobile units to achieve the desired coverage; and providing instructions to the one or more mobile units, the instructions operable to cause the one or more mobile units to move to the respective determined securing location.

In some examples or embodiments the desired coverage is obtained based on a user input.

Some examples or embodiments further comprising receiving information about a predefined securing location for one or more of the one or more mobile units.

In some examples or embodiments the predefined securing location is set based on a user input.

In the interest of conciseness not all possible alternatives which fall within the scope of the present disclosure have been explicitly discussed herein. As the skilled person will appreciate, in the present disclosure any aspect discussed from the perspective of an element being operable to do an action also discloses the same feature from the perspective of a method including a method step corresponding to the action. Similarly, any discussion presented from the perspective of a method step also discloses the same features from the perspective of any one or more suitable elements being operable or configured to carry out some or all of the method step. It is also considered within the present disclosure that for any method step(s), there can be a computer program configured to carry out, when executed, the method step(s).

Within the context of the present disclosure a device, such as a terminal, a base station, or a network module or node, or server is generally considered from a logical perspective, as the element carrying out the appropriate function. Any such device may be implemented using one or more physical elements as deemed appropriate. For example, it may be implemented in one (or more) of: a standalone physical device, in two or more separate physical devices, in a distributed system, in a virtual environment using any suitable hardware or hardware combination, etc.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement examples of the present disclosure. Accordingly, examples provide a program comprising code for implementing a system or method as claimed in any preceding claim and a machine readable storage storing such a program. Still further, examples of the present disclosure may be conveyed electronically via any medium such as a communication signal carried over a wired or wireless connection and examples suitably encompass the same.

All of the features disclosed in this specification (including any accompanying claims, abstract, and drawings) may be combined in any combination, except combinations where some features are mutually exclusive. Each feature disclosed in this specification, including any accompanying claims, abstract, and drawings, may be replaced by alternative features serving the same, equivalent, or similar purpose, unless expressly stated otherwise. Thus, unless expressly stated otherwise, each feature disclosed in one example of a generic series of equivalent or similar features.

The present teachings are not restricted to the details of any of the foregoing examples. Any novel combination of the features disclosed in this specification (including any accompanying claims, abstract, and drawings) may be envisaged. The claims should not be construed to cover merely the foregoing examples, but also any variants which fall within the scope of the claims.

## Claims

1. A mobile unit for a communications network including a radio access network and a fixed node, the mobile unit comprising:
an unmanned aerial vehicle, UAV;
a radio transceiver for transmitting and receiving wireless communications over the radio access network, the radio transceiver attached to the UAV;
a communication interface for establishing communication with the fixed node of the communications network, so as to enable exchange of communications transmitted and received over the radio access network by the radio transceiver with the fixed node of the communications network; and
an attachment device for removably securing the UAV to a structure.

2. The mobile unit of claim 1, wherein the fixed node of the communications network comprises a baseband unit, and wherein the communication interface is operable to establish a fronthaul connection between the radio transceiver and the baseband unit.

3. The mobile unit of claim 1, wherein the fixed node of the communications network comprises a core network gateway, and wherein the communication interface is operable to establish a backhaul connection between the radio transceiver and the core network gateway.

4. The mobile unit of any of claims 1 to 3, wherein the communication interface comprises a wireless communication interface.

5. The mobile unit of any of claims 1 to 3, wherein the communication interface comprises an optical communication interface.

6. The mobile unit of any of claims 1 to 3, wherein the communication interface comprises a wired communication interface.

7. The mobile unit of any of claims 1 to 6, wherein the attachment device comprises a magnetic attachment element.

8. The mobile unit of any of claims 1 to 7, wherein the attachment device comprises an electromagnetic attachment element.

9. A docking unit for removably securing a mobile unit according to any of claims 1 to 8, the docking unit comprising:
an anchoring device, the anchoring device arranged to mechanically interface with an attachment device of the mobile unit, so as to secure the mobile unit to the anchoring device.

10. The docking unit of claim 9, further comprising a power transfer unit, operable to supply electrical power to the mobile unit when the mobile unit is secured to the anchoring device.

11. The docking unit of claim 9 or 10, further comprising a communication connector, the communication connector arranged to communicatively couple with the communication interface of the mobile unit when the mobile unit is secured to the anchoring device.

12. A system for a communications network, comprising:
a mobile unit according to any of claims 1 to 8; and
a fixed node of the communications network, the fixed node comprising a core network gateway.

13. The system of claim 12, wherein the fixed node further comprises a baseband unit, and wherein the baseband unit is communicatively coupled to the core network gateway.

14. The system of claim 12 or 13, further comprising a docking unit according to any of claims 9 to 11.

15. A method for operating a mobile unit for a communications network including a radio access network and a fixed node, the method comprising:
positioning the mobile unit proximate a securing location of a structure, the mobile unit comprising a unmanned aerial vehicle, UAV, and a radio transceiver attached to the UAV;
removably securing the mobile unit at the securing location via an attachment device;
establishing communication with the fixed node of the communications network; and
transmitting or receiving, via the radio transceiver, wireless communications over the radio access network.

16. The method of claim 15, further comprising:
detaching the mobile unit from the securing location;
repositioning the mobile unit proximate a second securing location of the structure;
removably securing the mobile unit at the second securing location via the attachment device;
establishing communication with the fixed node of the communications network; and
transmitting or receiving, via the radio transceiver, wireless communications over the radio access network.

17. A method for deploying one or more mobile units according to claims 1 to 8, comprising:
determining a desired coverage;
determining a securing location of each mobile unit of the one or more mobile units to achieve the desired coverage; and
providing instructions to the one or more mobile units, the instructions operable to cause the one or more mobile units to move to the respective determined securing location.

18. The method of claim 17, wherein the desired coverage is obtained based on a user input.

19. The method of claim 17 or 18, further comprising receiving information about a predefined securing location for one or more of the one or more mobile units.

20. The method of claim 19, wherein the predefined securing location is set based on a user input.
